# EUROPEAN PATENT APPLICATION

(11) **EP 2 335 976 A1**
(43) Date of publication of application: **22.06.2011**
(21) Application number: 09179595.5
(22) Date of filing: 17.12.2009
(51) Int. Cl.: B60R 3/02

(54) **Foldable step for vehicles**

(71) Applicant: IVECO MAGIRUS AG, 89079 Ulm (DE)
(72) Inventor: Fauconnet, Gilles, 38190 Froges (FR); Fitz, Harald, 77948 Friesenheim (DE)
(74) Representative: Borsano, Corrado

(57) **Abstract**

The invention refers to a foldable step for vehicles, comprising a step plate and a pivoting device for pivoting the step plate between a retracted position and an unfolded position. The pivoting device comprises a rigid arm being hinged to a vehicle structure and being turnable around a horizontal rotation axis. The first pulley is arranged on the rotation axis of the arm and fixed to the vehicle structure. A second pulley is connected to the step plate and ro-tatable about a second rotation axis parallel to the rotation axis of the arm at the free end of the arm. An endless belt is conducted over the first and the second pulley.

## Description

The present invention relates to a foldable step for vehicles, comprising a step plate and a pivoting device for pivoting the step plate between a retracted position and an unfolded position.

Steps, footboards and the like are often used at rescue vehicles to give access to vehicle compartments and lockers in which rescue equipment is stored. For example such lockers can be located in a lateral portion of a fire engine. When the locker is located at a high position above the ground, accessing the contents of the locker may be difficult. This is especially the case with lockers located above a wheel of the vehicle, because it is difficult for construction-conditioned reasons to locate a step in the area of the wheel housing.

Generally this problem can be solved by providing a foldable step under the locker that unfolds a step plate that can easily be entered from the ground. In a stowage position, the step plate is retracted inside a compartment of the vehicle. Only when the step is used in a rescue mission, when the rescue vehicle is stationary, the step plate is unfolded and lowers to be entered by a person. However, the known technical solutions for providing foldable steps are unsatisfactory because they are complicated under cinematic aspects and do not match certain requirements. For example, the unfolding process must be conducted fast and reliably, which is not the case with the known foldable steps.

It is therefore an object of the present invention to provide a foldable step for a vehicle of the above kind, especially for use in a rescue vehicle, that comprises a simple construction that allows a fast unfolding process to give access to a vehicle compartment located in a high position above the ground, especially above a wheel housing.

This object is achieved by a foldable step comprising the features of claim 1.

According to the present invention, the pivoting device for pivoting the step plate comprises a rigid arm that is hinged to a structural part of the vehicle, i.e., a console fixed on a super structure of the vehicle. Due to the hinged arrangement, the rigid arm is pivotable around a horizontal axis.

On the rotation axis of the arm, a first pulley is arranged in a fixed position with respect to the vehicle structure. This means that this pulley does not rotate with the arm when the arm performs a turning movement around this axis. At the free end of the arm, i.e. opposite to the first pulley, a second pulley is connected to the step plate, being rotatable around a second rotation axis that is arranged parallel to the above mentioned rotation axis of the arm. The first pulley and the second pulley are connected by an endless belt that is conducted over these pulleys.

The retracted position of the step plate can be identified with an upright position of the arm in which the step plate is stored within a respective vehicle compartment. To reach the unfolded position, the arm can be turned about its rotation axis to reach a generally horizontal position. During this turning movement, the first pulley keeps its rotation position, since it is fixed with respect to the vehicle structure. Meanwhile the endless belt is displaced with respect to the arm and transmits a torque to the second pulley at the end of the arm. This transmission is such that the second pulley keeps its turning position during the pivoting movement of the arm with respect to the first pulley and the vehicle (corresponding to an absolute coordinate system). As the second pulley is connected to the step plate, the step plate can keep a horizontal position when the arm is turned outwardly. With other words, the first pulley, the second pulley and the endless belt represent a kinematic system to keep the orientation of the step plate mainly with respect to an absolute coordinate system during its movement from the retracted position to the unfolded position.

According to one preferred embodiment of the present invention, the second pulley is connected to the step plate in a fixed manner.

In this embodiment the orientation of the step plate exactly keeps the constant turning position of the second pulley, with the effect that the position of the step plate can be maintained exactly during the pivoting movement of the rigid arm.

According to another preferred embodiment, the second pulley is connected to the step plate rotatable within a limited angular range.

In this embodiment it is possible to deflect the step plate to a certain extent with respect to the second pulley to which it is connected. This gives the option to move the step plate in a slightly tilted position when desired, for example, to reach a tilted storing position in the retracted position of the pivoting device. When the rigid arm is swinging from the retracted position to the unfolded position, the step plate can slide into a horizontal usage position when it slips out of its compartment within the vehicle because of its own weight. A mechanism can be provided at the connection between the second pulley and its rotation axis to limit the angular range for the movement of the step plate with respect to the second pulley.

Preferably the second pulley is fitted onto a shaft body being fixed to the step plate and comprising a recess on its outer circumferential surface, said recess receiving a spline on an inner circumferential surface of the second pulley, said spline having an angular clearance between different turning positions within said recess, said turning positions defining said angular range for turning the second pulley with respect to step plate.

This embodiment comprises a means for limiting a movement of the step plate with respect to the second pulley. It is to be mentioned that this angular range is comparatively small and may only comprise some ten degrees. As described above, the second pulley keeps a constant turning position during the unfolding process performed by the pivoting device. However, because of the clearance that is given to the spline to move within the recess, the step plate can move independent from the turning position of the second pulley. For example, one turning position can correspond to the horizontal usage position of the step plate that is automatically taken by the step plate when moved out of its compartment due to its own weight. Another turning position may correspond to a tilted position of the step plate that is taken in the retracted position of the pivoting device for storing the step plate at the vehicle.

According to another preferred embodiment of the present invention, the foldable step comprises guide pulleys for guiding the endless belt, said guide pulley being connected to the arm in a rotatable manner between the first pulley and the second pulley.

According to a preferred embodiment, the foldable step comprises a flap being connected to the arm pivotable about a pivot axis parallel to the rotation axis of the arm and being positioned vertically within the retracted position. This flap can be, for example, a mudguard covering the wheel housing partially. In the retracted position, the step plate is located directly above the wheel housing, the mudguard being located directly at the vehicle. When the foldable step unfolds, the mudguard lies itself flat on the ground, the rigid arm carrying the step plate being arranged above the mudguard.

Preferably the foldable step is positioned at the lateral portion of the vehicle, and the rotation axis of the arm is oriented in the driving direction of the vehicle.

In the following the present invention will be explained with respect to the attached drawings, wherein:
Fig. 1 is a schematic side view of a first embodiment of a foldable step according to the present invention, shown in a retracted position;
Fig. 2 shows the foldable step of Fig. 1 in an intermediate position between the retracted position and an unfolded position, and
Fig. 3 is a schematic view of the foldable step of Figs. 1 and 2, shown in a completely unfolded position;
Fig. 4 shows a step plate of a second embodiment of a foldable step according to the present invention in a tilted position, and
Fig. 5 shows the step plate of Fig. 4 in a horizontal position.

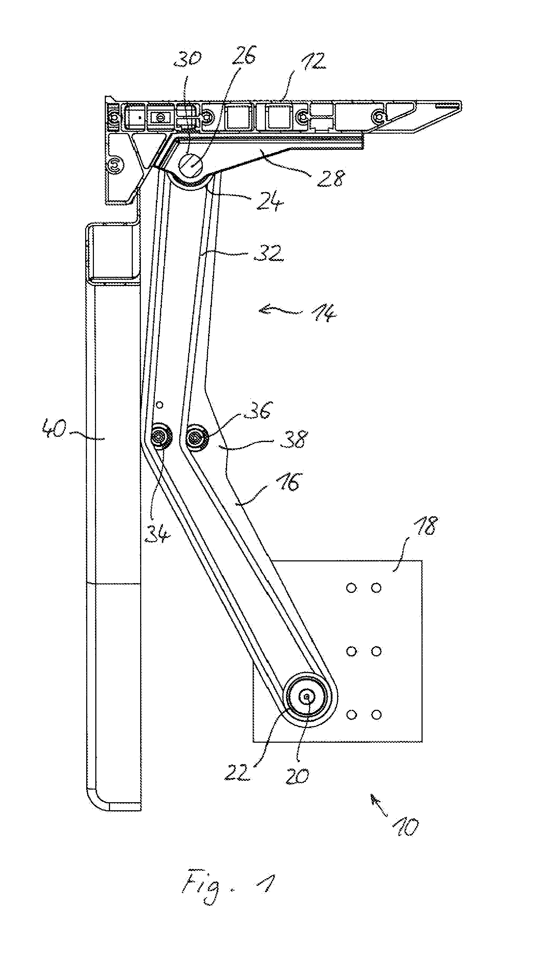

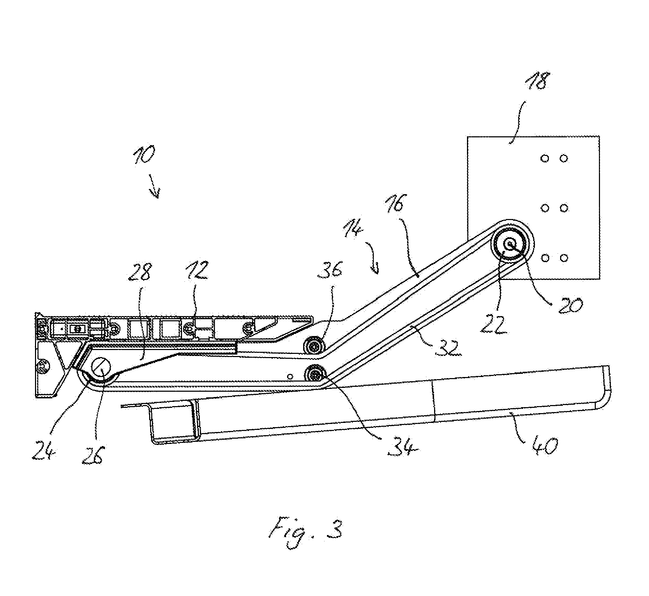

The foldable step 10 shown in Fig. 1 comprises a step plate 12 and a pivoting device 14 generally denoted by reference number 14 for pivoting the step plate between a retracted position, as shown in Fig. 1, to an unfolded position as shown in Fig. 3. This foldable step 10 is attached to a side portion of a vehicle, especially a rescue vehicle like a fire engine, and serves to enable the access to a compartment to store rescue equipment. For example said foldable step 10 can be attached at a lateral position of the vehicle where a locker for storing rescue equipment is located above a wheel housing of the vehicle, where the compartment is difficult to reach from the gruond.

The pivoting device 14 comprises a rigid arm 16 that is hinged to a console 18 that forms a structural part of the vehicle. This hinged arrangement of the rigid arm 16 is formed by a rotation axis 20 that is fixed to the console 18 and stands vertically to the plane of the drawing in Fig. 1. The extension direction of this rotation axis 20 corresponds to the driving direction of the vehicle. The rigid arm 16 can be turned about this fixed horizontal rotation axis 20 between a generally upright position, as shown in Fig. 1, in a counter clockwise direction to reach a generally horizontal position depicted in Fig. 3. The arm 16 is operated by a suitable driving means that is not shown in the figures.

On the inside of the arm that can be viewed in Fig. 1, a first pulley 22 is fixed to the rotation axis 20 so that it is fixed with relation to the vehicle structure 18. When the arm 16 is turned about the rotation axis 20, the first pulley 22 keeps its rotation position, i.e., the arm 16 is rotated with respect to the first pulley 22.

At the free end of rigid arm 16, a second pulley 24 is attached to provide a connection between the rigid arm 16 and the step plate 12. This second pulley 24 is rotatable around a second rotation axis 26 at the free end of the rigid arm 16, said second rotation axis 26 being arranged parallel to the rotation axis 20 of the rigid arm 16. The second pulley 26 is fixed to a structural part 28 at the bottom of the step plate 12, i.e. it is fixed with respect to the step plate 12. To provide this fixed connection, the structural part 28 comprises a through hole 30 for receiving the second rotation axis 26. On the other hand the rotation axis 26 lies within a respective opening in the free end of the rigid arm 16 rotatable so that the second pulley 24 can be turned with respect to the rigid arm 16.

The pivoting device 14 further comprises an endless belt 32 that is conducted over the circumferential surfaces of the first pulley 22 and the second pulley 24. Between these pulleys 22 and 24, the endless belt 32 is guided by two guide pulleys 34,36 to follow the shape of the rigid arm 16. By means of the endless belt 32 a torque can be transmitted from the first pulley 22 to the second pulley 24.

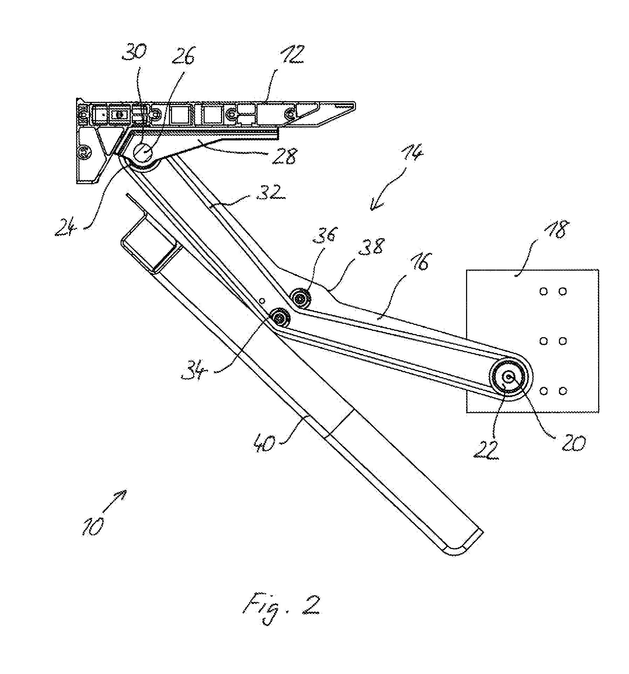

In this embodiment, the first pulley 22, the second pulley 24 and the endless belt 32 represent a mechanism to keep the horizontal position of the step plate 12 when the rigid arm 16 conducts a turning movement from the upright position in Fig. 1 to the unfolded position in Fig. 3. Because the first pulley 22 is fixed with respect to the vehicle structure 18 but turnable with respect to the rigid arm 16, it keeps its turning position when the rigid arm 16 is turned in the counter clockwise direction, as depicted in Fig. 2, while the endless belt 32 is moved with respect to the extension direction of the rigid arm 16, transmitting a torque to the second pulley 24 that is also turnable with respect to the free end of the rigid arm 16. With other words, the endless belt 32 couples the turning position of the second pulley 24 to the fixed turning position of the first pulley 22. As the second pulley 24 is connected to the step plate 12 in a fixed manner, the step plate 12 keeps its horizontal position in each turning position of the rigid arm 16. When the unfolded position in Fig. 3 is reached, the step plate 12 lies flat on an outer section of the rigid arm 16 so that the rigid arm supports the step plate 12, and a user can step on the step plate 12.

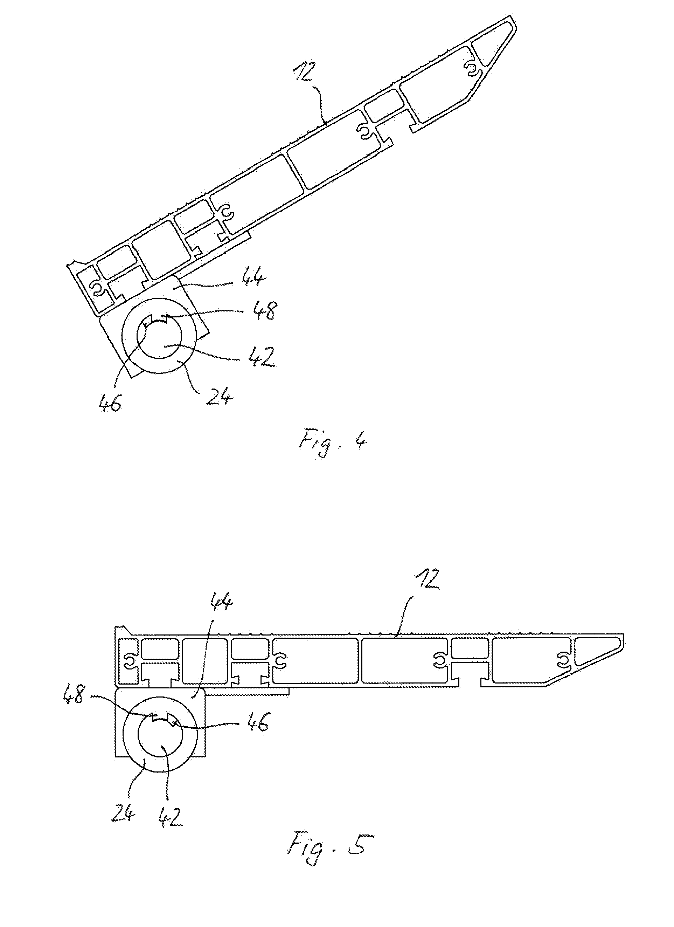

At an intermediate position of the rigid arm 16, where the rigid arm 16 comprises a sharp bent 38 and where the guide pulleys 34,36 are located, a flap 40 is hingedly attached to the outside of the rigid arm 16. This flap 40 can represent a mudguard of the wheel housing that covers the wheel housing partially in the retracted position of the foldable step 10. During the turning process of the rigid arm 16, the flap 40 lies flat on the ground to be positioned horizontally, while it is positioned vertically in the retracted state of the foldable step 10 in Fig. 1. In the foregoing embodiment, it has been stated that the second pulley 24 is connected to the step plate 12 in a fixed manner. In the second embodiment described in the following with respect to Figs. 4 and 5, the second pulley 24 can be turned with respect to the second rotation axis 26 at the free end of the rigid arm 16 within a certain limited angular range. In this embodiment the second rotation axis 26 is formed by a shaft body 42 that is formed integrally with a structural part 44 at the bottom of the step plate 12. When the shaft body 42 is turned around the second rotation axis, the step plate 12 performs a tilting movement between different positions shown in Figs. 4 and 5.

The shaft body 42 comprises a recess 46 its outer circumferential surface. On the other hand, the second pulley 24 comprises a spline 48 on its inner circumferential surface. The spline 48 lies within the recess 46. However, the recess 46 has a greater extension in the circumferential direction than the spline 48 so that the spline 48 can move between different angular positions within the recess 46. This angular clearance of the spline 48 within the recess 46 gives a certain degree of tilting the step plate 12 between the different tilting positions. In Figs. 4 and 5, the endless belt 32 is not shown. However, the mechanism for transmitting a torque from the first pulley 22 to the second pulley 24 is the same as in the first embodiment shown in Figs. 1 to 3, so that the second pulley 24 keeps its turning position during pivoting the rigid arm 16 to the outside. As shown in Figs. 4 and 5, a spline 48 keeps its position at the top of the second pulley 24 in all pivoting positions of the rigid arm 16. However, with respect to the second pulley 24, the step plate 12 can be tilted with respect to the turning position of the second pulley 24 because of the angular clearance of the spline 48 with respect to the recess 46. Fig. 4 shows a position in which the step plate 12 is tilted upwardly, which can be a storing position in the retracted state of the foldable step 10. When the rigid arm 16 is pivoted in the counter clockwise direction, as shown in Figs. 2 and 3, the step plate 12 can slip out of its compartment in the vehicle and fall into the horizontal position shown in Fig. 5 because of its own weight, as the center of gravity of the step plate 12 is displaced with respect to its rotation axis 26. The resulting horizontal position in Fig. 5 is limited by the outer end of the recess 46 so that the step plate 12 cannot be turned any further in the clockwise direction with respect to the second pulley 24.

It is clear from the above that the endless belt 32 can be replaced by any other suitable means to transmit a torque from the first pulley 22 to the second pulley 24, for example, by a chain, a tooth belt or the like.

## Claims

1. Foldable step (10) for vehicles, comprising a step plate (12) and a pivoting device (14) for pivoting the step plate (12) between a retracted position and an unfolded position,
**characterised in that** the pivoting device (14) comprising a rigid arm (16) being hinged to a vehicle structure (18) and being turnable around a horizontal rotation axis (20),
a first pulley (22) being arranged on the rotation axis (20) of the arm (16) and being fixed with relation to the vehicle structure (18),
a second pulley (24) being connected to the step plate (12) and being rotatable around a second rotation axis (26) arranged parallel to said rotation axis (20) of the arm (16) at the free end of the arm (16),
and a endless belt (32) being conducted over the first pulley (22) and the second pulley (24).

2. Foldable step according to claim 1, **characterised in that** said second pulley (24) is connected to the step plate (12) in a fixed manner.

3. Foldable step according to claim 1, **characterised in that** said second pulley (24) is connected to the step plate (12) rotatable within a limited angular range.

4. Foldable step according to claim 3, **characterised in that** said second pulley (24) is fitted onto a shaft body (42), said shaft body (42) being fixed to the step plate (12) and comprising a recess (46) on its circumferential surface, said recess (46) receiving a spline (48) on an inner circumferential surface of the second pulley (24), said spline (48) having an angular clearance between different turning positions within said recess (46), said turning positions defining said angular range for turning the second pulley (24) with respect to the step plate (12).

5. Foldable step according to one of the preceding claims, **characterised by** guide pulleys (34,36) for guiding the endless belt (32), said guide pulleys (34,36) being connected to the arm (16) in a rotatable manner between the first pulley (22) and the second pulley (24).

6. Foldable step according to one of the preceding claims, **characterised by** a flap (40) being connected to the arm (16) pivotable around a pivot axis parallel to the rotation axis (20) of the arm (16) and being positioned vertically in the retraced position.

7. Foldable step according to one of the preceding claims, **characterised in that** said foldable step (12) is positioned at a lateral portion of the vehicle and that the rotation axis (20) of the arm (16) extends in the driving direction of the vehicle.
